(19) Europäisches Patentamt
European Patent Office
Office européen des brevets

(11) **EP 1 204 856 B2**

## (12) NEUE EUROPÄISCHE PATENTSCHRIFT
Nach dem Einspruchsverfahren

(45) Veröffentlichungstag und Bekanntmachung des Hinweises auf die Entscheidung über den Einspruch:
**16.11.2011 Patentblatt 2011/46**

(45) Hinweis auf die Patenterteilung:
**13.07.2005 Patentblatt 2005/28**

(21) Anmeldenummer: **00962340.6**

(22) Anmeldetag: **18.08.2000**

(51) Int Cl.:
***G01N 21/64*** *(2006.01)*

(86) Internationale Anmeldenummer:
**PCT/EP2000/008116**

(87) Internationale Veröffentlichungsnummer:
**WO 2001/014859 (01.03.2001 Gazette 2001/09)**

(54) **VERFAHREN ZUR BESTIMMUNG VON SUBSTANZEN MITTELS DER EVANESZENZFELDMETHODE**

METHOD FOR THE DETERMINATION OF SUBSTANCES USING THE EVANESCENCE FIELD METHOD

PROCEDE POUR METTRE EN EVIDENCE DES SUBSTANCES SELON LA TECHNIQUE DU CHAMP EVANESCENT

(84) Benannte Vertragsstaaten:
**AT BE CH CY DE DK ES FI FR GB GR IE IT LI LU MC NL**

(30) Priorität: **20.08.1999 EP 99116418**

(43) Veröffentlichungstag der Anmeldung:
**15.05.2002 Patentblatt 2002/20**

(73) Patentinhaber:
• **Stiftung für Diagnostische Forschung**
**1785 Cressier sur Morat (CH)**
• **Leuze electronic GmbH**
**73277 Owen (DE)**

(72) Erfinder:
• **SCHAWALLER, Manfred**
**CH-1785 Cressier (CH)**
• **QUAPIL, Gerald**
**73277 Owen/Teck (DE)**

(74) Vertreter: **Ruckh, Rainer Gerhard**
**Fabrikstrasse 18**
**D-73277 Owen/Teck (DE)**

(56) Entgegenhaltungen:
EP-A- 0 519 622    EP-A1- 0 671 622
WO-A-96/09532    WO-A1-89/09394
WO-A1-93/07466    WO-A1-93/25908
WO-A1-95/02703    WO-A1-96/15270
WO-A1-96/35940    WO-A1-97/32212
WO-A1-98/02732    WO-A1-98/58079
WO-A1-99/06835    WO-A2-94/27137
WO-A2-98/22799    US-A- 4 451 434
US-A- 4 461 829    US-A- 5 156 972
US-A- 5 300 423

• KLEE B. ET AL: 'A model system for the development of an optical biosensor based on lipid membranes and membrane-bound receptors' SENSORS AND ACTUATORS B Bd. 29, Oktober 1995, Seiten 307 - 311
• ABEL A.P. ET AL: 'Anal. chem.', Bd. 68, teil 17 10 September 1996 Seiten 2905 - 2912
• DUVENECK G.L.ET AL: 'Proc. SPIE', Bd. 2631, 1996 Seiten 14 - 28

**EP 1 204 856 B2**

**Beschreibung**

Die vorliegende Erfindung betrifft ein Verfahren zur Bestimmung von Substanzen auf Basis der Evaneszenzfeldmethode. Die vorliegende Erfindung kann insbesondere in der Diagnostik und Analytik eingesetzt werden.

Die medizinische Diagnostik, im speziellen die immunologische Diagnostik, basiert zu einem großen Teil auf dem ELISA (Enzyme-Linked-Immunoabsorbent-Assay). Eine neuere Übersicht über Immuno-Assays findet sich bei Hage, Anal. Chem. 71 (1999), 294R-304R. Ein ELISA-Test dient zur Bestimmung der Konzentration von Antigenen oder Antikörpern. Die zu untersuchende Substanz (z.B. ein Antigen) wird zunächst mit einem festen Träger in Kontakt gebracht, an den vorher ein spezifischer Reaktionspartner für die zu untersuchende Substanz (z.B. ein Antikörper) gekoppelt wurde. Durch die Bindung der zu untersuchenden Substanz an den auf dem Träger gekoppelten Reaktionspartner wird die zu untersuchende Substanz an dem festen Träger konzentriert. Anschließend wird ein zweiter Reaktionspartner (z.B. ein weiterer Antikörper) für die zu untersuchende Substanz mit dem Träger in Kontakt gebracht, wobei dieser Reaktionspartner mit einem Enzym markiert ist, welches einen colorimetrischen Nachweis erlaubt. Durch die Reaktion dieses zweiten Reaktionspartners mit der an die Oberfläche des Trägers gekoppelten, zu untersuchenden Substanz entsteht ein farbiges Produkt, welches optisch ausgewertet werden kann. Als Festphase kommen dabei meistens standardisierte Kunststoffplatten, haufig aus Polystyrol, mit 96 Vertiefungen ("Wells") zur Anwendung. Die Oberfläche der Kunststoff-Wells bindet Proteine im Nanogramm-Bereich durch Adsorption, was eine für immunologische Nachweise ausreichende Menge ist. Für die Markierung des zweiten Reaktionspartners, welcher meist ein Immunoglobulin ist, mit Enzym gibt es eine Reihe von Möglichkeiten. Gängige Markierungen sind Peroxidase oder alkalische Phosphatase.

ELISA's zeigen sehr gute Ergebnisse hinsichtlich Empfindlichkeit und Spezifität, die erreichbaren Nachweisgrenzen liegen im Nanogrammbereich oder darunter. Es gibt die verschiedensten Ausführungsformen von Assays, die auf diesem Prinzip beruhen. Dabei werden je nach Fragestellung Antigene oder Antikörper nachgewiesen.

Ein wesentlicher Nachteil des ELISA ist jedoch die Handhabung des Tests, da nacheinander verschiedene Reagenzien zu den Wells zugegeben und wieder entfernt werden müssen. Insgesamt können zehn oder mehr Pipettier-, Wasch- und Inkubationsschritte erforderlich sein. Deshalb sind ELISA's zeit- und arbeitsaufwendig und müssen von einem speziell ausgebildeten Personal mit großer Sorgfalt durchgeführt werden. Ein weiterer Nachteil des ELISA's ist die durch die Summe der Inkubations- und Waschschritte benötigte Zeitdauer für einen Assay bzw. Test, der normalerweise eine bis mehrere Stunden dauert.

Mittels der Evaneszenzfeldmethode kann die Interaktion von beispielsweise Biomolekülen an einer Oberfläche direkt beobachtet werden. Dabei wird die Interaktion des Reaktanten in Lösung mit einer festen Matrixoberfläche gemessen. Man kann ohne Zeitverzögerung (in "real-time") die Bindung des Liganden physikalisch als Oberflächen-Plasmonen-Resonanz ("Surface Plasmon Resonance") messen. Die Vorteile gegenüber einem ELISA sind das Wegfallen weiterer Pipettierschritte nach der Zugabe der Reagenzien und das Wegfallen der Warteschritte.

In US-A-4451434 ist ein Verfahren offenbart in dem mittels der Evaneszenzfeldmethode die Interaktion von Biomolekülen an der Oberfläche direkt beobachtet wird. Insbesondere wird in dieser Patenschrift eine Lösung mit einem Farbstoff verwendet, welcher im Absorptionsbereich des verwendeten Anregungslichtes und des verwendeten Fluorophors absorbiert. Das durch die nicht einwandfreie Beschaffenheit der Küvettenoberflächen in das Volumen der Küvette gestreute Licht kann mit dem Farbstoff zumindest zum Teil absorbiert werden.

EP-A1-0671622 beschreibt optische Meßinstrumente und Verfahren zur Messung von fluoreszierenden Substanzen unter Anwendung eines Evaneszenzfeldes, wobei mindestens ein Reaktionspartner an der Oberfläche eines Lichtwellenleiters gebunden verliegt.

Die nicht ideale Streuung des Lichtstrahls bereitet jedoch Probleme, selbst wenn physikalische Maßnahmen zur Reduktion des Streulichts vorgenommen werden. Durch Streuung gelangt Licht auch in das Volumen der Küvette und verursacht dort eine Hintergrundfluoreszenz. Unter "Volumen" wird erfindungsgemäß die sich außerhalb des Evaneszenzfelds befindende Flüssigkeit verstanden, welche nicht-gebundene Fluorophor-haltige Verbindungen enthält. Ferner kann sowohl in Kunststoff- wie auch von Glasküvetten die Polarisation des Lichtstrahls gedreht werden. Dies führt insbesondere zu Reflektionen des Anregungslichts bei der Auskopplung. Es entsteht sog. vagabundierendes Licht, das gemeinsam mit Volumen- und Oberflächenstreueffekten zu einer Volumenanregung führen kann.

Somit liegt der vorliegenden Erfindung die Aufgabe zugrunde, ein Verfahren zur Bestimmung von Substanzen, insbesondere biologisch aktiven Substanzen, bereitzustellen, bei dem eine Anregung des sich im Volumen befindenden Fluorophors unterbunden werden kann.

Diese Aufgabe wird durch die in den Patentansprüchen gekennzeichneten Gegenstände gelöst.

Die Figuren zeigen:

Figur 1 ist eine schematische Darstellung einer Ausführungsform des erfindungsgemäßen Verfahrens.

Figur 2 zeigt eine schematische Darstellung einer weiteren Ausführungsform des erfindungsgemäßen Verfahrens.

2

Figur 3 zeigt den Intensitätsverlauf von elektromagnetischer Strahlung innerhalb einer Farbstofflösung gemäß dem Lambert-Beer'schen Gesetz.

Figur 4 zeigt in doppelt logarithmischer Darstellung den Intensitätsverlauf in Abhängigkeit von der Eindringtiefe einer evaneszenten Welle und einer durch Absorption gemäß des Lambert-Beer'schen Gesetzes abgeschwächten Welle.

Figur 5 zeigt die Absorptionsspektren einer Reihe von Farbstoffen.

Figur 6 zeigt die Bestimmung der optimalen Konzentration eines Farbstoffes zur Verwendung gemäß dem erfindungsgemäßen Verfahren.

Figur 7 zeigt eine mittels des erfindungsgemäßen Verfahrens gemessene Reaktionskinetik der Anlagerung eines Proteins an auf der Oberfläche gebundene Reaktionspartner $R^1$.

Figur 8 zeigt eine Vergleichsmessung zur Reaktionskinetik gemäß Figur 7, welche wie bei Figur 7 gemessen wurde. Jedoch wurde bei diesem Vergleichsbeispiel die Oberfläche nicht mit einem Reaktionspartner $R^1$ für das Protein beschichtet.

Erfindungsgemäß wird zunächst eine Oberfläche, wie in Anspruch 1 definiert bereitgestellt, welche mindestens einen Reaktionspartner $R^1$ gebunden bzw. immobilisiert umfaßt. Gebunden bedeutet dabei vorzugsweise, daß der Reaktionspartner $R^1$ durch Adsorption an der Oberfläche anhaftet (direkte Adsorption). Der Reaktionspartner $R^1$ kann aber auch über ein Brückenglied, beispielsweise ein Protein, wie einen Antikörper oder ein Antigen, an die Oberfläche gebunden sein. Ferner kann der Reaktionspartner $R^1$ auch durch eine kovalente Bindung an die Oberfläche gebunden sein. Dies kann beispielsweise bei einer Acrylat-Oberfläche durch Umsetzung mit einem Carbodiimid bewirkt werden. "Gebunden" bedeutet im Sinne der Erfindung das Anhaften eines Reaktionspartners bzw. einer Verbindung an einer Oberfläche bzw. an einem weiteren Reaktionspartner und/oder Verbindung und umfaßt sowohl kovalente als auch nicht-kovalente Wechselwirkungen, wie beispielsweise Wechselwirkungen aufgrund ionischer, polarer oder unpolarer Wechselwirkungen.
Der Reaktionspartner $R^1$ kann durch übliche Verfahren auf die Oberfläche aufgebracht werden. Beispielsweise kann ein als Reaktionspartner $R^1$ dienendes Protein auf die Oberfläche beschichtet werden (Coaten). Der Reaktionspartner $R^1$ kann vorzugsweise adsorptiv oder durch kovalente Bindung an die Oberfläche gebunden sein. Im Anschluß an diesen Arbeitsgang wird die Oberfläche vorzugsweise mit einer weiteren Lösung behandelt, durch welche nicht mit dem Reaktionspartner $R^1$ behaftete Stellen der Oberfläche blockiert bzw. geblockt werden, beispielsweise durch ein weiteres Protein, welches im wesentlichen nicht mit den in der zu kontaktierenden Lösung enthaltenen Komponenten reagiert.
Die vorstehende Oberfläche ist beispielsweise eine Innenseite eines konkaven Behälters, wie eine Küvette oder eine Vertiefung (Well) einer Mikrotiterplatte.
Erfindungsgemäß kann der an der Oberfläche gebundene Reaktionspartner $R^1$ mittels eines Reaktionspartners $R^2$ auf der Oberfläche einen Komplex ausbilden, wobei dieser Komplex neben dem Reaktionspartner $R^1$ mindestens die zu bestimmende Substanz und die mindestens eine Fluorophor-haltige Verbindung umfaßt. Durch den an der Oberfläche gebundenen Reaktionspartner $R^1$ wird der Komplex mit der zu bestimmende Substanz an der Oberfläche "verankert", d.h. fixiert und kann gleichzeitig durch die Markierung mit der Fluorophor-haltigen Verbindung detektiert werden.
Erfindungsgemäß wird unter einem "Komplex" oder "Konjugat" eine molekulare Verknüpfung bzw. Aneinanderbindung zweier oder mehrerer vorzugsweise chemischer oder biochemischer Substanzen verstanden. Die Ausbildung des Komplexes erfolgt vorzugsweise mittels selektiven und/oder spezifischen Umsetzungen, besonders bevorzugt durch Antigen-Antikörper-Reaktionen. Erfindungsgemäß umfaßt der Begriff "Umsetzung" sowohl kovalente als auch nicht-kovalente Interaktionen zweier oder mehrerer Reaktionspartner, wobei innerhalb eines Komplexes oder Konjugats auch beide Arten der Wechselwirkung nebeneinander vorliegen können. Nicht-kovalente Interaktion kann bespielsweise Van-der-Waals-Wechselwirkung, polare und/oder ionische Wechselwirkung der Reaktionspartner bedeuten. Der Begriff "Reaktionspartner" bedeutet in der vorliegenden Erfindung eine Verbindung mit einer Affinität zu einer anderen Substanz.
Erfindungsgemäß umfaßt der Komplex neben dem Reaktionspartner $R^1$ mindestens die zu bestimmende Substanz und die mindestens eine Fluorophor-haltige Verbindung.
Zur Bindung dieses Komplexes an den Reaktionspartner $R^1$ mittels des Reaktionspartners $R^2$ gibt es u.a. folgende Möglichkeiten:

(1) Die zu bestimmende Substanz selbst ist der Reaktionspartner $R^2$.
(2) Die zu bestimmende Substanz umfaßt den Reaktionspartner $R^2$, d.h. der Reaktionspartner $R^2$ ist eine Teilstruktur der zu bestimmenden Substanz.
(3) Die zu bestimmende Substanz weist eine Affinität bzw. Bindungsstelle für den Reaktionspartner $R^2$ auf. Nach

der Bindung des Reaktionspartners $R^2$ an die zu bestimmende Substanz kann sich somit Fall (2) ergeben.

(4) Eine weitere Verbindung umfaßt den Reaktionspartner $R^2$ oder weist eine Affinität zu dem Reaktionspartner $R^2$ auf, wobei diese weitere Verbindung ferner mindestens eine Bindungsstelle für die zu bestimmende Substanz umfaßt. In diesem Fall können die weitere Verbindung, die zu bestimmende Substanz und der Reaktionspartner $R^2$ als Konjugat bzw. Komplex (aller oder nur einzelner) in die Lösung gegeben werden oder das Konjugat bildet sich in der Lösung.

Im folgenden wird auf bevorzugte Ausführungsformen dieser Fälle (1) bis (4) im einzelnen eingegangen.

Gemäß einer bevorzugten Ausführungsform des erfindungsgemäßen Verfahrens kann die zu bestimmende Substanz selbst eine Affinität zu dem Reaktionspartner $R^1$ auf der Oberfläche aufweisen und kann daher direkt mit diesem Reaktionspartner $R^1$ eine Bindung eingehen. Gemäß dieser Ausführungsform kann die zu bestimmende Substanz als Reaktionspartner $R^2$ an den Reaktionspartner $R^1$ auf der Oberfläche binden. Wenn es sich beispielsweise bei der zu bestimmenden Substanz um einen Antikörper handelt, kann auf der Oberfläche ein für diesen Antikörper spezifisches Antigen aufgebracht sein, oder umgekehrt.

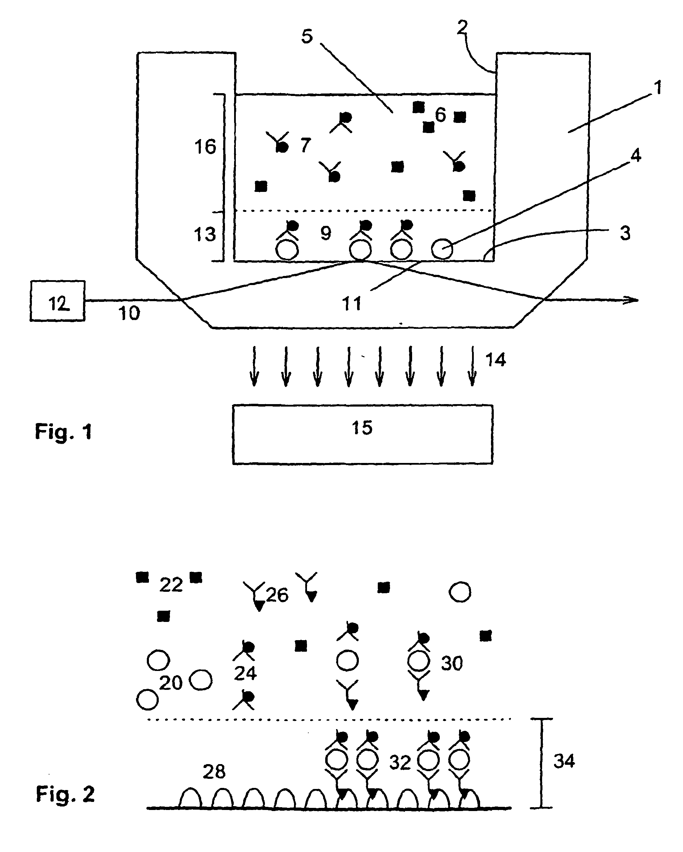

Figur 1 zeigt eine schematische Darstellung einer Ausführungsform der verwendeten Küvette, sowie des erfindungsgemäßen Verfahrens. Die Küvette 1 weist eine Vertiefung 2 auf, deren Oberfläche 3 Reaktionspartner $R^1$ 4 für das zu bestimmende Protein gebunden umfaßt. Die Vertiefung 2 nimmt ferner die mit der Oberfläche 3 zu kontaktierende Lösung 5 auf, welche einen Farbstoff 6 und welche gemäß dieser Ausführungsform die bereits als Konjugat mit der Fluorophor-haltigen Verbindung vorliegende, zu bestimmende Substanz 7 umfaßt. Die zu bestimmende Substanz reagiert mit dem auf der Oberfläche gebundenen Reaktionspartner $R^1$ 4 zu einem Komplex 9 auf der Oberfläche 3. Beispielsweise mit einer Laserdiode 12 wird ein Lichtstrahl 10 auf die Unterseite der Oberfläche 3 projeziert, welcher an der Phasengrenzfläche 11 total reflektiert wird. Dadurch bildet sich über der Oberfläche 3 ein Evaneszenzfeld 13 aus, in dem sich im wesentlichen nur an die Oberfläche im Komplex 9 gebundenes Fluorophor befindet. Im Gegensatz zur schematischen Darstellung in Figur 1 erstreckt sich das Evaneszenzfeld üblicherweise nicht über die gesamte Breite des Küvettenbodens. Beispielsweise kann das Evaneszenzfeld eine Ausdehnung von etwa 1 mm$^2$ aufweisen. Durch die Anregung der Fluorophore durch das Evaneszenzfeld 13 emittieren die auf der Oberfläche gebundenen Fluorophore Photonen 14, welche beispielsweise mittels eines Photomultipliers 15 verstärkt und gemessen werden können. Die Fluoreszenz des Volumens 16 wird durch die Anwesenheit des Farbstoffs 6 unterdrückt.

Gemäß einer anderen bevorzugten Ausführungsform weist die zu bestimmende Substanz selbst (im wesentlichen) keine oder nur geringe Affinität zu dem Reaktionspartner $R^1$ auf der Oberfläche auf. In diesem Fall enthält beispielsweise die mit der Oberfläche in Kontakt zu bringende Lösung eine weitere Verbindung, welche einen Reaktionspartner $R^2$ und eine Bindungsstelle zu der zu bestimmenden Substanz umfaßt. Der Reaktionspartner $R^2$ kann an den Reaktionspartner $R^1$ auf der Oberfläche binden und fixiert die zu bestimmende Substanz so indirekt an der Oberfläche. Diese weitere Verbindung dient somit als Brückenglied zwischen der zu bestimmenden Substanz und dem Reaktionspartner $R^1$ auf der Oberfläche. Beispielsweise kann als Reaktionspartner $R^1$ auf der Oberfläche Avidin vorliegen. Die weitere Verbindung umfaßt dann neben einer Bindungsstelle für die zu bestimmende Substanz beispielsweise Biotin, welches an das auf der Oberfläche gebundene Avidin binden kann. Diese Ausführungform hat beispielsweise den Vorteil, daß eine mit Avidin beschichtete Oberfläche im Gegensatz zu manchen Antikörpern und Antigenen lyophilisiert werden kann und getrocknet oder lyophilisiert sehr stabil ist. Außerdem weist das System Avidin/Biotin eine sehr hohe Dissoziationskonstante $K_D$ auf. Weiterhin ist es so möglich, für eine Reihe von verschiedenen Bestimmungen immer eine Avidin-beschichtete Oberfläche vorzulegen und nur die weitere Verbindung, welche mit der Lösung mit der Oberfläche in Kontakt gebracht wird, auf die zu bestimmende Substanz abzustimmen.

Figur 2 zeigt schematisch diese Ausführunsform des erfindungsgemäßen Verfahrens. In der mit der Oberfläche in Kontakt gebrachten Lösung liegen nebeneinander die zu bestimmende Substanz 20, ein Farbstoff 22, eine Fluorophor-haltige Verbindung 24 und eine weitere Verbindung 26 vor. Auf der Oberfläche ist der Reaktionspartner $R^1$ 28 gebunden. Die weitere Verbindung und die Fluorophor-haltige Verbindung lagern sich an die zu bestimmende Substanz an (Konjugat 30), und es erfolgt eine Bindung des Konjugats 30 über den in der weiteren Verbindung 26 vorliegenden Reaktionspartner $R^2$ an den auf der Oberfläche vorliegenden Reaktionspartner $R^1$ 28 zu dem Komplex 32. So wird der Komplex 32, welcher die Fluorophor-haltige Verbindung 24 enthält, an die Oberfläche gebunden und kann durch Messung der Fluoreszenz im Evaneszenzfeld 34 bestimmt werden.

Für diese Ausführungform des erfindungsgemäßen Verfahrens eignen sich beispielsweise neben dem System Avidin(oder Streptavidin)/Biotin alle Liganden bzw. Liganden-bindende Systeme, in welchen beispielsweise Proteine selektive und/oder spezifische Bindungsstellen für einen oder mehrere Liganden, wie beispielsweise Histidin, Histidintags, Lectine, und/oder Digoxigenin, aufweisen, und natürlich Antigen/Antikörper-Systeme.

Die mit der Oberfläche zu kontaktierende Lösung enthält erfindungsgemäß weiterhin mindestens eine Fluorophor-haltige Verbindung. Erfindungsgemäß wird unter einem Fluorophor eine fluoreszierende Verbindung, wie ein Fluoreszenzfarbstoff, verstanden. Bevorzugt sind fluoreszierende Proteine und/oder niedermolekulare fluoreszierende chemische Verbindungen. Als fluoreszierende Proteine können erfindungsgemäß Phycobiliproteine, wie Allophycocyanin (APC), Cryptofluor Crimson oder Cryptofluor Red, verwendet werden. Als niedermolekulare fluoreszierende Verbindungen können beispielsweise Cy5 oder BODIPY (4,4-Diluor-4-bora-3a,4a-diaza-s-indazen-Fluorophore) genannt werden. Bevorzugt sind Fluoreszenzfarbstoffe mit einer Absorption im Bereich von 600 bis 700 nm.

Weiterhin kann anstelle eines Fluorophors eine Fluorophorvorläuferverbindung verwendet werden, aus welcher vor dem Meßvorgang, beispielsweise durch Änderung des pH-Werts oder durch Abspalten einer Schutzgruppe, das Fluorophor freigesetzt wird.

Erfindungsgemäß umfaßt der Begriff Fluorophor auch phosphoreszierende Verbindungen. Wird eine solche phosphoreszierende Verbindung als Fluorophor verwendet, so wird die ausgestrahlte Phosphoreszenz bestimmt, welche zeitlich verschoben zur Anregung stattfindet. Somit ist es möglich, den Zeitraum des Einstrahlens von dem Zeitraum des Messens zeitlich zu trennen.

Weiterhin weist diese Fluorophor-haltige Verbindung eine Bindungsstelle für die zu bestimmende Substanz auf. Beispielsweise kann das Fluorophor an einen Antikörper gebunden vorliegen. Dieser Fluorophor-haltige Antikörper kann vorzugsweise in einer Antigen-Antikörper-Reaktion mit der zu bestimmenden Substanz, beispielsweise einem Protein, als Antigen reagieren.

Gemäß einer weiteren Ausführungsform liegt die zu bestimmende Substanz selbst als Fluorophor-haltige Verbindung vor. Gemäß dieser Ausführungsform können Kompetitions-Assays durchgeführt werden, welche sich insbesondere durch eine geringe Nachweisgrenze auszeichnen.

Mit dem erfindungsgemäßen Verfahren können die verschiedensten Substanzen nachgewiesen werden. Insbesondere eignet sich das Verfahren zur Bestimmung biologisch aktiver Substanzen, wie Hormonen, Proteinen wie Antigenen, Antikörpern oder Haptenen, Pharmazeutika, Viren, Bakterien usw.. Das Verfahren kann aber auch zum Nachweis von Umweltgiften, Toxinen, usw., dienen.

Besonders bevorzugt werden die zu bestimmenden Substanzen durch immunologische Reaktionen nachgewiesen.

Erfindungsgemäß bildet sich ein Komplex aus mindestens dem ersten Reaktionspartner $R^1$, der zu bestimmenden Substanz und der Fluorophor-haltigen Verbindung auf der Oberfläche aus. Es ist dann möglich, das an die Oberfläche gebundene Fluorophor durch durch das Evaneszenzfeld einer Lichtquelle anzuregen und die Fluoreszenz des Fluorophors zu messen.

Bei der Anregung des auf der Oberfläche gebundenen Fluorophors durch ein Evaneszenzfeld wird ein Lichtstrahl in einem derartigen Winkel auf die Unterseite der Oberfläche gerichtet, daß an der Phasengrenzfläche Küvette/Lösung Totalreflektion auftritt. Dadurch bildet sich ein Evaneszenzfeld oberhalb der Oberfläche in der Lösung aus, welches bis zu mehrere hundert Nanometer in die Flüssigkeit eindringen kann. Gemäß der vorliegenden Erfindung ist ein Einfallswinkel von mindestens 60° bis 90° bevorzugt, so daß sich ein Evaneszenzfeld in einer Höhe bis zu 400 nm, vorzugsweise 200 nm, besonders bevorzugt 50 bis 150 nm, über der Oberfläche ausbildet. Innerhalb dieses Evaneszenzfelds vermag das eingestrahlte Licht geeignete Fluorophore anzuregen. Das emittierte Fluoreszenzlicht wird beispielsweise mit einem Photomultiplier verstärkt und ausgewertet.

Als Lichtquelle kann monochromatisches Licht verwendet werden. Dabei sollte Licht einer Wellenlänge verwendet werden, welche vorzugsweise nicht mit der Emission des Fluorophors interferiert und welche sich mit der Absorptionsbande des Farbstoffs überschneidet. Als Lichtquelle ist ein Laser besonders bevorzugt, insbesondere Laser, welche Licht einer Wellenlänge von mindestens 635 nm emittieren. Insbesondere, wenn es sich bei der zu untersuchenden Lösung um Serum handelt, sind Wellenlängen von 600 bis 700 nm bevorzugt, da die Eigenfluoreszenz von Serum bei etwa 580 nm liegt.

Gemäß einer Ausführungsform der vorliegenden Erfindung kann die Zunahme des an die Oberfläche gebundenen Fluorophors mit zeitlich fortschreitender Reaktion direkt gemessen werden (in real-time). Da die Menge des an die Oberfläche gebundenen Fluorophors direkt proportional zur ursprünglich vorhandenen Menge Fluorophor-haltiger Verbindung ist, erlaubt das erfindungsgemäße Verfahren die quantitative Bestimmung von in der Lösung befindlichen Reaktanden in Echtzeit ohne zusätzliche weitere Wasch- und/oder Pipettierschritte.

Da die Absorptionskoeffizienten und die Emissionseigenschaften für Fluorophore sehr günstig sind, ergeben sich geringe Nachweisgrenzen. Bereits nach einigen Minuten kann man Reaktionen qualitativ und/oder quantitativ auswerten.

Probleme bereitet jedoch die nicht ideale Streuung des Lichtstrahls in der Küvette, selbst wenn physikalische Maßnahmen zur Reduktion des Streulichts vorgenommen werden. Durch Streuung gelangt Licht auch in das Volumen der Küvette und verursacht dort eine Hintergrundfluoreszenz. Unter "Volumen" wird erfindungsgemäß die sich außerhalb des Evaneszenzfelds befindende Flüssigkeit verstanden, welche nicht-gebundene Fluorophor-haltige Verbindungen enthält. Ferner kann sowohl in Kunststoff- wie auch von Glasküvetten die Polarisation des Lichtstrahls gedreht werden. Dies führt insbesondere zu Reflektionen des Anregungslichts bei der Auskopplung. Es entsteht sog. vagabundierendes Licht, das gemeinsam mit Volumen- und Oberflächenstreueffekten zu einer Volumenanregung führen kann.

Erfindungsgemäß kann eine Anregung des sich im Volumen befindenden Fluorophors unterbunden werden, wenn der mit der Oberfläche zu kontaktierenden Lösung mindestens ein Farbstoff zugegeben wird, welcher eine Absorption im Absorptions- und Emissionsbereich des Fluorophors aufweist.

Ein Vergleich der Eindringtiefen von evaneszenter Welle und von vagabundierendem Licht zeigt, daß die Unterdrückung der Volumenanregung durch Zugeben eines Farbstoffs gelingt. Physikalisch wird die Lichtabsorption durch das Lambert-Beer'sche Gesetz beschrieben, wobei die Intensität des Lichts logarithmisch mit der Entfernung durch Absorption abnimmt:

$$I[x] = I_0 \mathrm{Exp}(-\alpha c x)$$

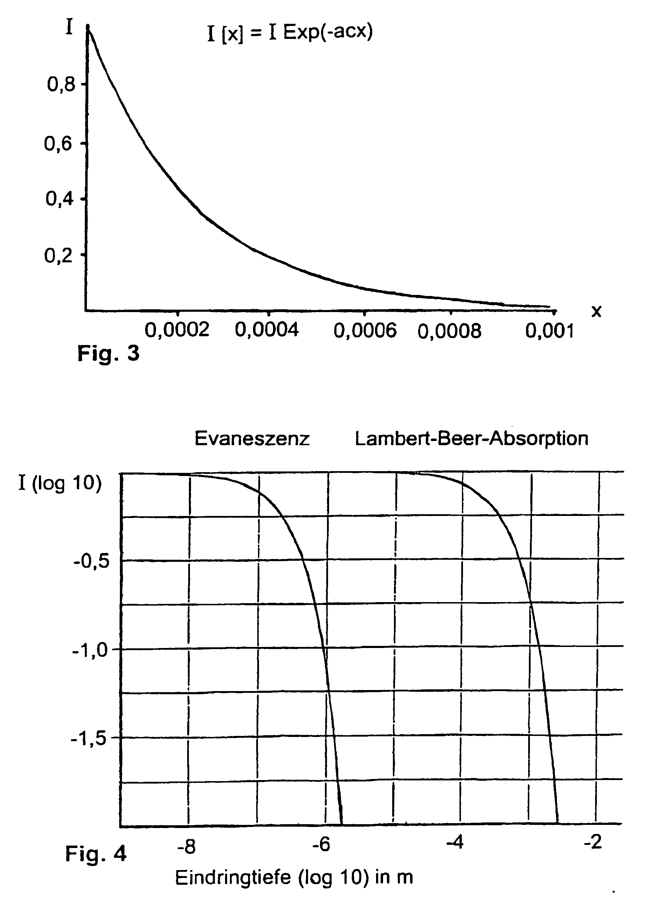

wobei $I_0$ die Intensität des in das absorbierende Medium einfallenden Lichts, I die Intensität des aus dem absorbierenden Medium austretenden Lichts, x die Dicke des absorbierenden Mediums (Schichtdicke), $\alpha$ der Absorptionskoeffizient und c die Konzentration eines sich Lösung befindenden Farbstoffes sind. Figur 3 zeigt den Intensitätsverlauf einer Lösung eines Absorberfarbstoffs mit zunehmender Schichtdicke, wobei der Verlauf der Intensität für $\alpha$ = 100.000 Mol/(l x cm) und c = 20 mMol bis zu einer Tiefe von 1 mm dargestellt ist. Es ist zu erkennen, daß auf dieser Strecke das Streulicht auf 1/100 seiner Anfangsintensität abgeschwächt wird. Da das Streulicht überwiegend seitlich eingekoppelt wird, genügt diese Abschwächung, um das Volumensignal und damit auch die Meßunsicherheit für das zeitabhängige Signal der Reaktionskinetik, dem dieses Signal überlagert ist, in praktisch nutzbaren Grenzen zu halten.

Figur 4 zeigt einen Vergleich der Eindringtiefen der evaneszenten Welle mit der Eindringtiefe des Lichts bei Absorption durch einen Farbstoff. Die doppelt logarithmische Darstellung zeigt den Intensitätsverlauf in Abhängigkeit von der Eindringtiefe einer evaneszenten Welle (links) und einer durch Absorption abgeschwächten Welle (rechts). Die Ordinate liegt im Bereich von -2 bis 0, d.h. von 1/100 bis 1 log10 Intensität. Die dabei zugrunde gelegten Parameter entsprechen technisch realisierbaren Werten. Obwohl die Dämpfung des vagabundierenden Lichts wesentlich größere Eindringtiefen als das Licht der evaneszenten Welle zuläßt, kann eine Volumenanregung und -emission trotzdem effizient und im wesentlichen quantitativ unterdrückt werden, wie in den Beispielen gezeigt werden wird.

Ausschlaggebend für die Wirksamkeit der Unterdrückung ist der geometrische Abstand zwischen demjenigen Oberflächenteil der Küvette, von dem Licht auf den Detektor gelangen kann, und den Eindringorten des vagabundierenden Lichts in das Volumen.

Wie aus Figur 4 deutlich wird, genügt für eine Streulichtabschwächung von zwei Größenordnungen ein Abstand im Bereich von einem Millimeter. Dieser Abstand kann durch eine entsprechende Küvettendimensionierung einfach eingehalten werden.

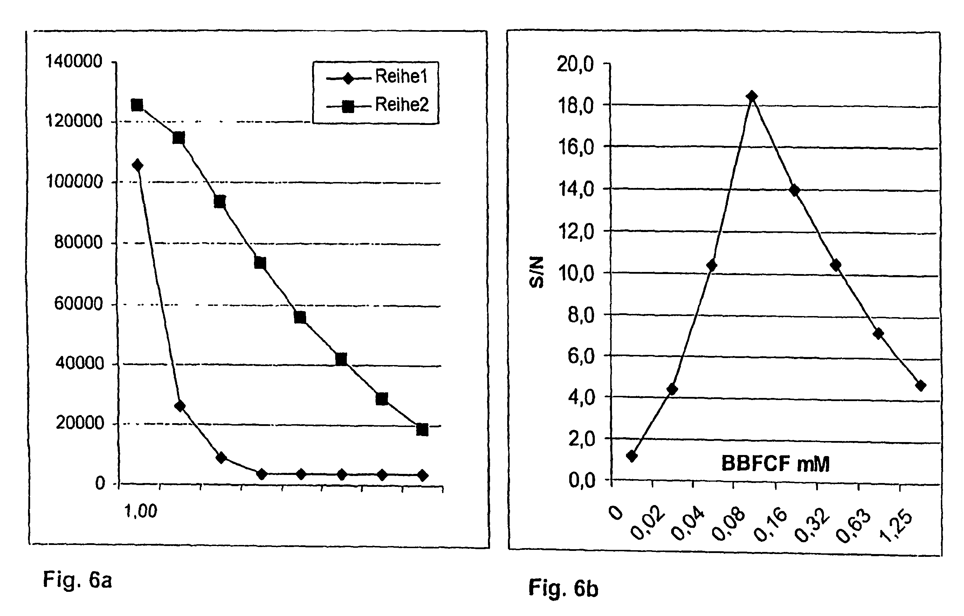

Die Absorption des dem Volumen zugegebenen Farbstoffs ist erfindungsgemäß auf den Absorptions- und Emissionsbereich des Fluorophors abgestimmt. Es kann ein einzelner Farbstoff oder auch eine Mischung von Farbstoffen verwendet werden. Der Absorptionsbereich des Fluorophors wird in der Regel mit der Wellenlänge der verwendeten Lichtquelle korrelieren. Dabei ist es nicht notwendig, daß der Farbstoff ein Absorptionsmaximum in diesem Spektralbereich aufweist, es kann bereits eine Schulter im Absorptionsspektrum ausreichen. Werden beispielsweise Fluorophore wie APC oder Cy5 verwendet, kann der verwendete Farbstoff eine Absorption zwischen 600 nm und 700 nm aufweisen, wie beispielsweise Brilliantblau (Brillant-Blue FCF). Die Konzentration des zugegebenen Farbstoffs ist abhängig vom Absorptionskoeffizienten des jeweiligen Farbstoffs in Lösung und hängt zusätzlich von der Frequenz des eingestrahlten Lichts ab. Die Konzentration des Farbstoffs kann je nach Farbstoff so eingestellt werden, daß das eindringende Licht innerhalb von 1 mm oberhalb der Oberfläche im wesentlichen absorbiert werden kann. Zur Bestimmung der jeweils optimalen Konzentration des Farbstoffs werden zunächst die Volumenfluoreszenz und die Fluoreszens im Evaneszenzfeld, d.h. die Oberflächenfluoreszenz, jeweils bei verschiedenen Farbstoffkonzentrationen gemessen (vgl. Figur 6a). Anschließend wird das Verhältnis von Oberflächenfluoreszenz zur Volumenfluoreszenz gegen die Konzentration des Farbstoffs aufgetragen (vgl. Figur 6b). Das Maximum der Kurve 6b stellt die optimale Konzentration des Farbstoffes dar. Erfindungsgemäß wird unter dem "Signal/Rausch-Verhältnis" das Verhältnins der Oberflächenfluoreszenz ("Signal") zur Volumenfluoreszenz ("Rauschen") verstanden. "Im wesentlichen absorbiert" kann dabei eine Intensitätslöschung von 70 %, vorzugsweise 80 %, besonders bevorzugt von mindestens 90 %, bedeuten.

Beispielsweise kann bei Verwendung von Brilliantblau FCF als Farbstoff eine Konzentration von 0,04 mM ausreichen, um weit mehr als 95% der Volumenfluoreszenz zu löschen (vgl. Tabelle 4, Beispiel 4). Da die erforderliche Konzentration des Farbstoffs u.a. auch von der verwendeten Küvette, der Meßanordung usw. abhängt, können auch noch geringere Farbstoffkonzentrationen für ein ausreichendes Signal/Rausch-Verhältnis genügen. Demgemäß beträgt beispielsweise die Konzentration von Brilliantblau FCF vorzugsweise mindestens 0,001 mM.

Vergleichsversuche, wie in Figur 6a und 6b dargestellt, haben gezeigt, daß das Signal/Rausch-Verhältnis von 1,3 : 1 auf bis zu 18,5 : 1 bei dem erfindungsgemäßen Verfahren verbessert werden konnte.

Die Küvette umfaßt vorzugsweise Glas oder einen Kunststoff, besonders bevorzugt einen Kunststoff, wie Polystyrol, Polypropylen, Polyethylen, Polyethylenterephthalat, Polycycloolefin, Polyacrylnitril, Polymethylmethacrylat und/oder Mischungen oder Blends dieser Kunststoffe. Es ist prinzipiell jeder Kunststoff geeignet, welcher im wesentlichen kein Licht im sichtbaren Bereich absorbiert. Gemäß einer Ausführungsfom kann der Kunststoff auch beispielsweise leicht bläulich eingefärbt sein, um eine durch Streulicht verursachte Emission herauszufiltern. Kunststoffküvetten können kostengünstig durch Spritzgießen erhalten werden und weisen vorzugsweise ein Reaktionsvolumen von 1 bis 400 $\mu$l, besonders bevorzugt 5 bis 200 $\mu$l, auf. Vorzugsweise sind die erfindungsgemäßen Küvetten oder Mikrotiterplatten einstückig ausgebildet. Es kann sich weiterhin als vorteilhaft ausweisen, wenn die Innenseite und/oder die Emissionsfläche, d.h. die Fläche aus der der emittierte Strahl aus der Küvette austritt, auf eine Oberflächenrauhigkeit von vorzugsweise höchstens 10 nm poliert ist/sind.

Die kleine Dimension und der niedrige Preis machen einen Einsatz des erfindungsgemäßen Verfahrens in der Routinediagnostik und -analytik realisierbar. In der praktischen Anwendung kann eine derartige Küvette oder Mikrotiterplatte bereits vorpräpariert und durch ein Spezialettiket verschlossen im Handel vertrieben werden. Die Vorpraparation umfaßt dabei das Beschichten der Oberfläche der Küvette oder Mikrotiterplatte mit dem ersten Reaktionspartner und gegebenenfalls das anschließende Blocken der nichtbeschichteten Stellen. Erfindungsgemäß liegt die beschichtete Küvette oder Mikrotiterplatte lyophilisiert vor. Es sind auch bereits der mindestens eine Farbstoff und die mindestens eine Fluorophor-haltige Verbindung und vorzugsweise auch die weitere Verbindung in der abgeschlossenen Küvette oder Mikrotiterplatte lyophilisiert, so daß zur Messung nur noch die zu untersuchende Substanz in Lösung zugegeben werden muß. Durch Versehen der Küvette oder Mikrotiterplatte mit einer Seriennummer kann jederzeit eine eindeutige Zuordnung der Erstellungscharge, der Nachweisreaktion und der Probe möglich sein.

Die vorliegende Erfindung betrifft ferner die Verwendung des erfindungsgemäßen Verfahrens zur Bestimmung von Reaktionskinetiken vorzugsweise immunologischer Reaktionen, sowie die Verwendung des Verfahrens in der medizinischen oder veterinärmedizinischen Diagnostik, der Lebensmittelanalytik, der Umweltanalytik oder der Analytik von Fermentationsprozessen.

Als Beispiele für konkrete Anwendungen können der Nachweis von Pflanzenschutzmitteln, wie Atrazin, in Trinkwasser, der Nachweis von Hormonen in Kalbfleisch, der Nachweis von Hormonen, wie HCG, sowie der direkte oder indirekte Nachweis von Viren, wie Hepatitis S und HIV, genannt werden.

Das allgemeine Meßprinzip wird im folgenden durch Beispiele weiter erläutert.

**Beispiel 1**

In diesem Beispiel wird der Einfluß der Konzentration des zugegebenen, an ein Protein gebundenen Fluorophors bestimmt. Bei dieser Messung ist nur an der Oberfläche gebundenes Fluorophor vorhanden, nichtgebundenes Fluorophor wurde weggewaschen. Ein Farbstoff wurde der Lösung nicht zugesetzt.

a) Beschichten einer Oberfläche einer Küvette mit CACMAK

Die Oberfläche einer Küvette wurde beschichtet, indem 200 $\mu$l Mouse IgGI, monoklonaler Antikörper Ac1-20.4-2. (CACMAK; Fa. Progen Biotechnik GmbH, Heidelberg, Germany) 5 $\mu$g/ml in PBS+ (PBS+ = 100 mM $PO_4$, pH 7,5; 100 mM NaCl) bei Raumtemperatur (RT) über Nacht (ON) auf der Oberfläche belassen wurde. Dann wurde die Oberfläche viermal mit PBS (phosphate buffered saline) gewaschen und mit 1% BSA (Bovine Serum Albumine) Miles Enhanced, PBS+, 300 $\mu$l, für eine Stunde bei RT behandelt.

b) Kontaktieren der Oberfläche mit dem zu bestimmenden Protein

GAMAPC (Konjugat aus Allophycocyanin (APC) und Crosslinked, Goat Anti-Mouse IgG (H+L); Molecular Probes, Leiden, Netherlands) in PBS+T (PBS+T = 100 mM $PO_4$, pH 7,5; 100 mM NaCl, 0,025v/v Tween20) wurde über Nacht bei RT auf der Oberfläche belassen. Anschließend wurde fünfmal mit PBS gewaschen, und es wurden 200$\mu$l PBS+T zugegeben und die Fluoreszenz mittels der Evaneszenzfeldmethode gemessen. Das Ergebnis ist in Tabelle 1 gezeigt.

Tabelle 1

| Konzentration der Beschichtungslösung des Antigens CACMAK [$\mu$g/$\mu$l] | Konzentration GAMAPC [$\mu$g/$\mu$l] | Emmission [Photonencounts/s] |
|---|---|---|
| 0 | 10 | 3.000 |
| 5 | 10 | 120.000 |
| 5 | 3 | 60.000 |
| 5 | 1 | 18.000 |

(fortgesetzt)

| Konzentration der Beschichtungslösung des Antigens CACMAK [μg/μl] | Konzentration GAMAPC [μg/μl] | Emmission [Photonencounts/s] |
|---|---|---|
| 5 | 0 | 3.000 |

Es wurde demnach eine von der Konzentration des auf der Oberfläche gebundenen Fluorophors APC abhängige Emission von Photonen festgestellt.

**Beispiel 2**

Endpunktreaktion mit Waschen des Chips und Messen der Fluoreszenz. Es ist nur gebundenes Fluorophor bei der Messung vorhanden.

a) Beschichten einer Oberfläche einer Küvette

Die Oberfläche von Küvenetten wurde beschichtet, indem 200 μl Humanserum 1:1000 in PBS+ bei Raumtemperatut (RT) über Nacht auf der Oberfläche belassen wurden. Dann wurde die Oberfläche viermal mit PBS gwaschen und mit 1% BSA (Bovine Serum Albumine) Miles enhanced, PBS+, 300 μl, für eine Stunde bei RT behandelt.

b) Kontaktieren der Oberfläche mit dem zu bestimmenden Protein

Anti-Human-IgG-Cy5-Konjugat (amersham pharmacia biotech, Dübendorf, Schweiz) in PBS+T wurde über Nacht bei RT auf der Oberfläche belassen. Anschließend wurde fünfmal mit PBS gewaschen, und es wurden 200 μl PBS+T zugegeben und die Fluoreszenz gemessen. Das Ergebnis ist in Tabelle 2 gezeigt.

Tabelle 2

| Beschichtetes Humanserum-Antigen | Anti-Human-IgG-Cy5-Konjugat | Emission [Photonencounts/s] |
|---|---|---|
| 0 | 1:100 | 3.000 |
| 1:1000 | 1:100 | 7.000 |
| 1:1000 | 1:300 | 6.000 |
| 1:1000 | 1:1000 | 5.000 |
| 1:1000 | 0 | 3.000 |

Wiederum konnte eine von der Konzentration des gebundenen Fluorophors Cy5 abhängige Emission von Photonen gemessen werden.

**Beispiel 3**

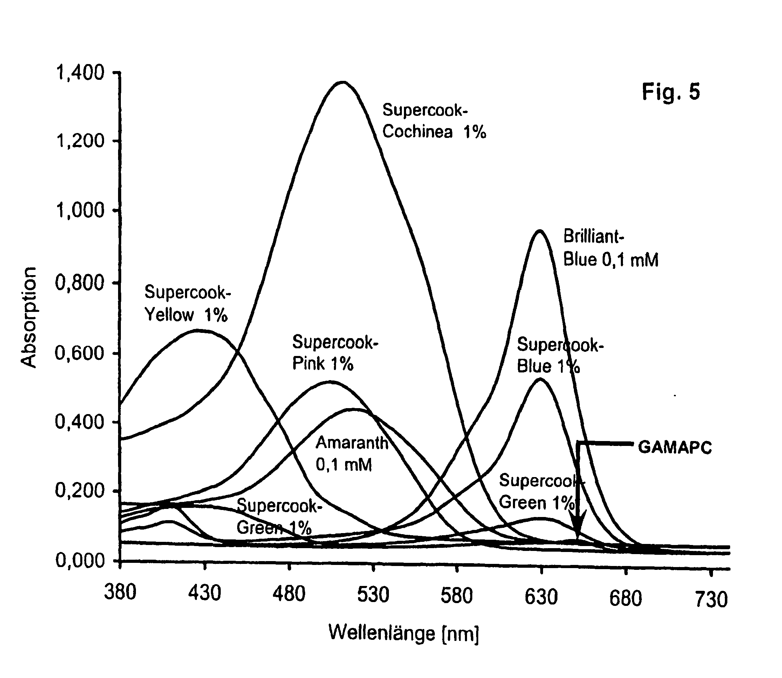

In diesem Beispiel wurde die Wirksamkeit verschiedener Farbstoffe zur Verminderung der Volumenabsorption untersucht. Die Oberfläche der Küvette war in diesem Beispiel nicht beschichtet, es wurde nur die Reduzierung der Fluoreszenz des in Lösung befindlichen Konjugats aus Protein und Fluorophor bestimmt. Die Fluorophore im Volumen der Reaktionslösung werden durch die geringen Mengen Streulicht angeregt und fluoreszieren. Die Absorptionsspektren der verwendeten Farbstoffe sind in Fig. 5 gezeigt.

GAMAPC 10 μg/ml in PBS+T wird mit verschiedenen Farbstoffen gemischt und die Fluoreszenz durch die Volumenanregung gemessen. Das Ergebnis ist in Tabelle 3 gezeigt.

Tabelle 3

| Zugegebener Farbstoff | Absorption des Farbstoffs bei 650 nm | Emission des Fluorophors [Fluoreszenzcounts/s] |
|---|---|---|
| Küvette ohne Fluorophor | --- | 3.300 |
| Kein Absorberfarbstoff | 0,00 | 210.000 |

(fortgesetzt)

| Zugegebener Farbstoff | Absorption des Farbstoffs bei 650 nm | Emission des Fluorophors [Fluoreszenzcounts/s] |
|---|---|---|
| Brilliant-Blue FCF[1] 0,25 mM | 0,55 | 4.200 |
| Amaranth[2] 1 mM | 0,05 | 120.000 |
| 5% Supercook Blue[3] | 0,30 | 4.400 |
| 5% Supercook Green[3] | 0,10 | 23.000 |
| 5% Supercook Egg Yellow[3] | <0,04 | 190.000 |
| 5% Supercook Pink[3] | <0,04 | 200.000 |
| 5% Supercook Cochineal[3] | 0,05 | 99.000 |
| Anmerkungen: [1] Brilliant-Blue FCF (Erioglaucine A), Fluka, Buchs, CH [2] Amaranth, Fluka, Buchs, CH [3] Supercook Food Colourings, Supercook, Leeds, GB | | |

Es wurde somit festegestellt, daß bei der Verwendung von APC als Fluorophor Farbstoffe oder Mischungen davon, die zwischen 600 und 700 nm absorbieren, die Volumenfluoreszenz durch Absorption des einfallenden und emittierten Lichts reduzieren.

**Beispiel 4**

In diesem Beispiel wird die Abhängikeit der Reduzierung der Volumenfluoreszenz von der Konzentration des Farbstoffs Brillantblau FCF (Brilliant-Blue FCF) bei Verwendung von APC als Fluorophor untersucht.

a) Vorbereitung der Küvette

Die Küvette wird mit 1 % BSA Miles enhanced, in PBS+ 300 µl, eine Stunde bei RT blockiert.

b) Kontaktieren mit der das Fluorophor und den Farbstoff enthaltenden Lösung

GAMAPC (10 µg/ml) in PBS+T wird mit Brilliantblau FCF in verschiedenen Konzentrationen gemischt und die Fluoreszenz der Volumenanregung gemessen.

Tabelle 4

| Zugegebene Farbe in PBS+T | Konzentration des Farbstoffs [mM] | Emission des Fluorophors [Fluoreszenzcounts/s] |
|---|---|---|
| keine (nur Küvette) | --- | 3.300 |
| keine (Küvette + GAMAPC) | --- | 106.000 |
| GAMAPC + Brilliant-Blue FCF[4] | 0,02 | 26.000 |
| GAMAPC + Brilliant-Blue FCF[4] | 0,04 | 9.000 |
| GAMAPC + Brilliant-Blue FCF[4] | 0,08 | 4.000 |
| GAMAPC + Brilliant-Blue FCF[4] | 0,16 | 4.000 |
| GAMAPC + Brilliant-Blue FCF[4] | 0,32 | 4.000 |
| GAMAPC + Brilliant-Blue FCF[4] | 0,63 | 4.000 |
| GAMAPC + Brilliant-Blue FCF[4] | 1,25 | 4.000 |
| GAMAPC + Brilliant-Blue FCF[4] | 2,50 | 4.000 |
| GAMAPC + Brilliant-Blue FCF[4] | 5,0 | 4.000 |
| GAMAPC + Brilliant-Blue FCF[4] | 10,0 | 4.000 |
| Anmerkung: [4] Brilliant-Blue FCF (Erioglaucine A), Fluka, Buchs, CH | | |

Die Reduktion der Volumenanregung ist abhängig von der Konzentration des Farbstoffs Brilliantblau im Volumen. Bei Brilliantblau FCF sind bereits bei einer Konzentrationen von 0,04 mm und darüber weit mehr als 95% der Volumenfluoreszenz gelöscht.

In diesem Beispiel wird der Einfluß des Farbstoffs auf die Fluoreszenz der an der Oberfläche gebundenen Fluorophore untersucht. Endpunktreaktion mit Waschen der Oberfläche und Messen der Fluoreszenz. Es ist nur gebundenes Fluorophor bei der Messung vorhanden.

Eine wie in Beispiel 1a) preparierte Küvette wird mit GAMAPC in PBS+T über Nacht bei RT kontaktiert und anschließend fünfmal mit PBS gewaschen.

Nach Zugabe von 200 µl PBS+T, gemischt mit Brilliantblau FCF in verschiedenen Konzentrationen, wurde die an die Oberfläche der Küvette gebundene Fluoreszenz von GAMAPC 10 µg/ml in PBS+T und die Fluoreszenz durch Volumenanregung gemessen.

Tabelle 5

| Zugegebener Farbstoff in PBS+T | Konzentration des Farbstoffs [mM] | Emission des Fluorophors [Fluoreszenzcounts/s] |
|---|---|---|
| keine (nur Küvette) | --- | 3.300 |
| keine (Küvette + GAM APC) | --- | 126.000 |
| GAMAPC(geb.) + Brilliant-Blue FCF[5] | 0,02 | 115.000 |
| GAMAPC(geb.) + Brilliant-Blue FCF[5] | 0,04 | 94.000 |
| GAMAPC(geb.) + Brilliant-Blue FCF[5] | 0,08 | 74.000 |
| GAMAPC(geb.) + Brilliant-Blue FCF[5] | 0,16 | 56.000 |
| GAMAPC(geb.) + Brilliant-Blue FCF[5] | 0,32 | 42.000 |
| GAMAPC(geb.) + Brilliant-Blue FCF[5] | 0,63 | 29.000 |
| GAMAPC(geb.) + Brilliant-Blue FCF[5] | 1,25 | 19.000 |
| GAMAPC(geb.) + Brilliant-Blue FCF[5] | 2,50 | 12.000 |
| GAMAPC(geb.) + Brilliant-Blue FCF[5] | 5,0 | 9.000 |
| GAMAPC(geb.) + Brilliant-Blue FCF[5] | 10,0 | 8.000 |
| Anmerkung: [5] Brilliant-Blue FCF (Erioglaucine A), Fluka, Buchs, CH | | |

Es wurde eine von der Konzentration des Farbstoffs im Volumen abhängige Reduktion der Evaneszenzfeldanregung des gebundenen APC festgestellt. Bei Brilliantblau-Konzentrationen von 0,04 mM sind etwa 35% der gebundenen Fluoreszenz gelöscht, d.h. die Reduktion der gebundenen Fluoreszenz ist wesentlich geringer als die Reduktion der Fluoreszenz durch Volumenanregung, wo mehr als 95% der Fluoreszenz durch die Farbstoffzugabe in der gleichen Konzentration gelöscht wurden.

### Beispiel 6

Dieses Beispiel zeigt, daß die Emission der Fluorophore, welche an der Oberfläche gebunden sind, durch die zugegebene Menge Farbstoff nicht wesentlich inhibiert wird, während die Volmenanregung stark reduziert ist. Daraus folgt ein besseres Signal/Rausch-Verhältnis und deshalb niedrigere Nachweisgrenzen.

Eine wie bei Beispiel 1a) preparierte Küvette wird mit GAMAPC in PBS+T über Nacht bei RT kontaktiert und anschließend fünfmal mit PBS gewaschen. Dann wurde wie in Beispiel 1b) GAMAPC in PBS+T über Nacht bei RT auf der Oberfläche belassen. Anschließend wurde fünfmal mit PBS gewaschen.

Die so präparierten Küvetten wurden den folgenden, verschiedenen Fluoreszenzmessungen unterworfen:

(1) Nach Zugabe von PBS+T (nur gebundenes Fluorophor)

(2) Nach Zugabe von APC (10 $\mu$g/ml in PBS+T) (gebundenes Fluorophor + Fluorophor im Volumen, aber ohne Farbstoff)

(3) Nach Zugabe von APC 10 $\mu$g/ml und Brilliantblau FCF (BB FCF) (0,25 mM in PBS+T) (gebundenes Fluorophor + Fluorophor im Volumen + Farbstoff)

Tabelle 6

| Chip | Mab | GAMAPC | Emission [Fluoreszenzcounts / s] | | |
|---|---|---|---|---|---|
| | $\mu$g/ml | $\mu$g/ml | (1) PBS+T | (2) PBS+T APC 10 $\mu$g/ml | (3) PBS+T APC 10 $\mu$g/ml BB FCF 0,25 mM |
| M1 | 0 | 10 | 3.000 | 230.000 | 5.000 |
| M2 | 5 | 10 | 120.000 | 300.000 | 59.000 |
| M3 | 5 | 3 | 72.000 | 280.000 | 29.000 |
| M4 | 5 | 1 | 26.000 | 170.000 | 16.000 |
| M5 | 5 | 0,3 | 5.500 | 230.000 | 7.200 |
| M6 | 5 | 0,1 | 4.600 | 230.000 | 6.000 |

Tabelle 7

| Chip | Signal/Rausch-Verhältnis[6] | |
|---|---|---|
| | (2) ohne Brilliantblau FCF | (3) mit Brilliantblau FCF |
| M1[7] | --- | --- |
| M2 | 1,3 | 11,8 |
| M3 | 1,2 | 5,8 |
| M4 | 0,7 | 5,8 |
| M5 | 1,0 | 3,2 |
| M6 | 1,0 | 1,2 |
| Anmerkungen:<br>[6] Signal/Rausch-Verhältnis = Verhältnis der Oberflächenemission ("Signal") zur Volumenemission ("Rauschen")<br>[7] Rauschen = Chip M1 - negative Reaktion (negative Kontrolle) | | |

Ergebnisse:

1. Abnehmende Konzentrationsreihe GAMAPC von M2 nach M6. Die negative Kontrolle M1 weist eine Emission in Höhe von 3.000 counts/s auf.

2. Ohne die Zugabe eines Farbstoffs, d.h. mit nicht gelöschter APC-Anregung im Volumen, ist keine eindeutige abnehmende Konzentrationsreihe von M2 nach M6 erkennbar. Vor allem geringe Werte verschwinden im Hintergrund der Volumenanregung.

3. Mit Brilliantblau FCF im Volumen ist die abnehmende Konzentrationsreihe M2 nach M6 deutlich erkennbar. Die negative Kontrolle M1 weist 5.000 counts/s auf. Durch Brilliantblau FCF reduziert sich die Emission des Volumens durch APC von 230.000 counts/s M1 auf 5.000 counts/s.

Die spezifische oberfächengebundene Fluoreszenz ist um etwa 50% reduziert. Das Signal/Rausch-Verhältnis ist bei Zugabe von Brilliantblau FCF wesentlich verbessert.

**Beispiel 7**

In diesem Beispiel wurden Reaktionskinetiken der Anlagerung eines fluorophormarkierten Proteins an einen auf der Oberfläche der Küvette gebundenen Reaktionspartner gemessen.

In eine wie in Beispiel 1a) preparierte Küvette wurden GAMAPC in PBS+T zugegeben, und die Fluoreszenz wurde in Abhängigkeit von der Zeit gemessen.

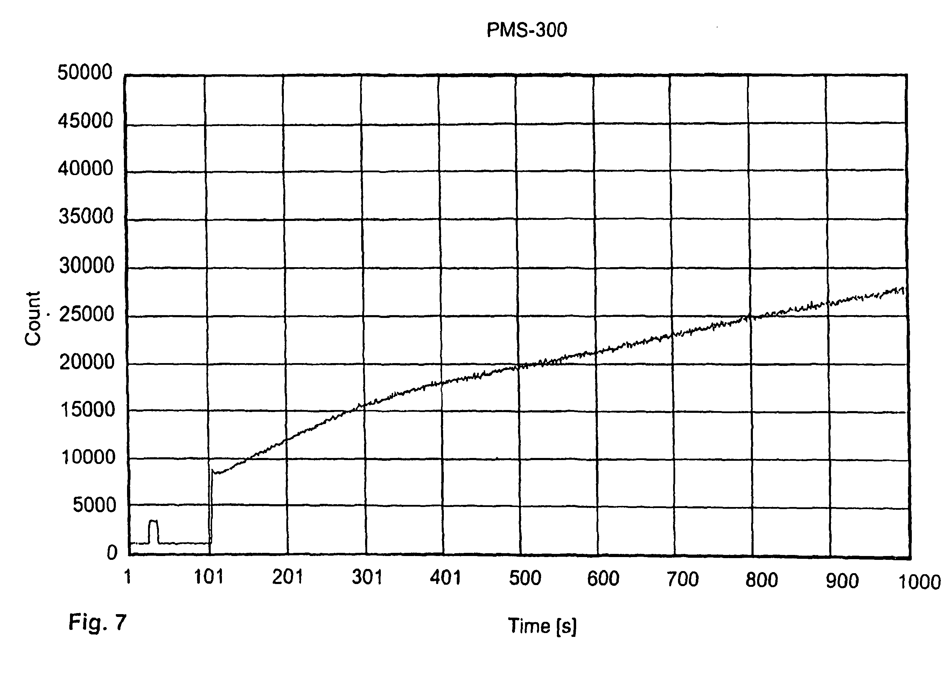

Fig. 7 zeigt die Änderung der Emission gegen die Zeit. Die Zugabe von GAMAPC erfolgte bei T = 100 s. Es wird eine Zunahme der Emission (Fluoreszenzcounts) mit der Reaktionszeit beobachtet, welche der Anlagerung des Fluorophormarkierten Proteins an den auf der Oberfläche gebundenen Reaktionspartner entspricht.

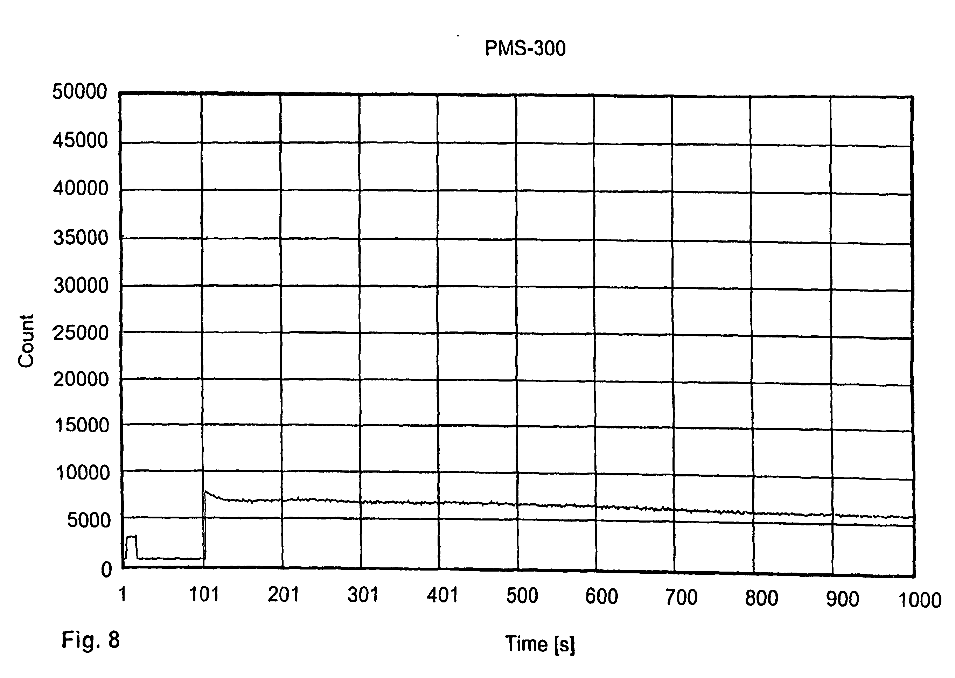

Zum Vergleich wurde die Änderung der Emission mit der Zeit bei einer Probe gemessen, bei der die Oberfläche der Küvette nicht mit gemäß Beispiel 1 a) mit Mouse-1gG beschichtet war (vgl. Fig. 8). Die Emission nahm mit der Zeit nicht zu, sondern blieb stabil.

**Patentansprüche**

1. Verfahren zur Bestimmung von Substanzen, umfassend die Schritte

   - Bereitstellen einer Oberfläche, welche mindestens einen lyophilisierten Reaktionspartner $R^1$ an der Oberfläche einer Küvette oder Mikrotiterplatte gebunden umfaßt,
   - Kontaktieren der Oberfläche mit einer Lösung, welche mindestens die zu bestimmende Substanz, mindestens eine Fluorophor-haltige Verbindung und mindestens einen Farbstoff umfaßt,
   worin sich an dem Reaktionspartner $R^1$ auf der Oberfläche ein Komplex ausbildet und worin dieser Komplex neben dem Reaktionspartner $R^1$ mindestens die zu bestimmenden Substanz und die mindestens eine Fluorophor-haltige Verbindung umfaßt, und
   - Anregen des auf der Oberfläche gebundenen Fluorophors durch das Evaneszenzfeld einer Lichtquelle und Messen der erzeugten Fluoreszenz, wobei
   der Farbstoff im Absorptions- und Emissionsbereich des Fluorophors absorbiert, und wobei das Kontaktieren dadurch erfolgt, daß die zu bestimmende Substanz in Lösung in die Küvette oder Mikrotiterplatte zugegeben wird, und der mindestens eine Farbstoff und die Fluorophor-haltige Verbindung lyophilisiert in der Küvette oder Mikrotiterplatte vorliegen.

2. Verfahren nach Anspruch 1, worin die zu bestimmende Substanz als Reaktionspartner $R^2$ an den Reaktionspartner $R^1$ auf der Oberfläche bindet.

3. Verfahren nach Anspruch 2, worin der an der Oberfläche gebundene Reaktionspartner $R^1$ ein Antigen oder ein Antikörper ist.

4. Verfahren nach Anspruch 1, worin ein Reaktionspartner $R^2$ die zu bestimmende Substanz umfaßt und an den Reaktionspartner $R^1$ auf der Oberfläche bindet.

5. Verfahren nach Anspruch 1, worin eine weitere Verbindung, welche eine Bindungsstelle für die zu bestimmende Substanz aufweist und einen Reaktionspartner $R^2$ enthält, an den Reaktionspartner $R^1$ auf der Oberfläche bindet, wobei die weiter Verbindung gegebenenfalls lyophilisiert in der Küvette oder Mikrotiterplatte vorliegt.

6. Verfahren nach Anspruch 5, worin der Reaktionspartner $R^1$ Avidin oder Streptavidin umfaßt und der Reaktionspartner $R^2$ Biotin und eine Bindungsstelle für die zu bestimmende Substanz umfaßt.

7. Verfahren nach einem der vorangehenden Ansprüche, worin die zu bestimmende Substanz eine biologisch aktive Substanz umfaßt, welche aus der Gruppe Hormone, Proteine, Viren, Bakterien, Pharmazeutika und Toxine ausgewählt ist.

8. Verfahren nach einem der vorangehenden Ansprüche, worin die zu bestimmende Substanz ein Protein, vorzugsweise ein Antigen oder einen Antikörper, umfaßt.

9. Verfahren nach einem der vorangehenden Ansprüche, worin die Fluorophor-haltige Verbindung eine fluoreszierende Verbindung und eine Bindungsstelle für die zu bestimmende Substanz aufweist.

10. Verfahren nach einem der vorangehenden Ansprüche, worin als Fluorophor fluoreszierende Proteine und/oder niedermolekulare fluoreszierende chemische Verbindungen verwendet werden.

11. Verfahren nach Anspruch 10, worin als fluoreszierende Proteine Phycobiliproteine, wie Allophycocyanin (APC), Cryptofluor Crimson oder Cryptofluor Red, verwendet werden.

12. Verfahren nach Anspuch 11, worin als niedermolekulare fluoreszierende Verbindungen Cy5 oder BODIPY verwendet werden.

13. Verfahren nach einem der vorangehenden Ansprüche, worin mindestens ein Fluorophor verwendet wird, welcher in einem Wellenlängenbereich von 600 bis 700 nm absorbiert.

14. Verfahren nach einem der vorangehenden Ansprüche, worin mindestens eine phosphoreszierende Verbindung als Fluorophor verwendet wird.

15. Verfahren nach einem der vorangehenden Ansprüche, worin eine Mischung von Farbstoffen verwendet wird, welche im Absorptions- und/oder Emmisionsbereich des Fluorophors absorbieren.

16. Verfahren nach einem der vorangehenden Ansprpüche, worin mindestens ein Farbstoff verwendet wird, welcher in einem Wellenlängenbereich von 600 bis 700 nm absorbiert.

17. Verfahren nach Anspruch 16, worin als der mindestens eine Farbstoff Brilliantblau FCF in einer Konzentration von mindestens 0,001 mM verwendet wird.

18. Verfahren nach einem der Ansprüche 1 bis 17, worin eine Küvette oder Mikrotiterplatte verwendet wird, welche mindestens einen Reaktionspartner für die zu bestimmende Substanz an einer Oberfläche gebunden umfaßt, wobei die Küvette einen Kunststoff umfaßt, und wobei die Innenseite und/oder die Emissionsfläche der Küvette auf eine Oberflächenrauhigkeit von höchstens 10 nm poliert ist/sind.

19. Verfahren nach Anspruch 18, wobei die Küvette Polystyrol, Polypropylen, Polyethylen, Polyacrylnitril, Polymethylmehtacrylat, Polycycloolefin, Polyethylenterephthalat und/oder Mischungen derselben umfaßt.

20. Verfahren nach Anspruch 18 oder 19, wobei die Küvette oder Mikrotiterplatte einteilig ist.

21. Verfahren nach einem der Ansprüche 18 bis 20, wobei die Küvette ein Reaktionsvolumen von 1 bis 400 µl aufweist.

22. Verwendung des Verfahrens nach einem der Ansprüche 1 bis 17, zur Bestimmung von Reaktionskinetiken immunologischer Reaktionen.

23. Verwendung des Verfahrens nach einem der Ansprüche 1 bis 17 in der medizinischen oder veterinärmedizinischen Diagnostik, der Lebensmittelanalytik, der Umweltanalytik oder der Analytik von Fermentationsprozessen.

**Claims**

1. Method for determining substances, comprising the steps of

- providing a surface comprising at least one lyophilized reaction partner $R^1$ bound to the surface of a cuvette or microtitre plate,
- contacting the surface with a solution comprising at least the substance to be determined, at least one fluorophore-containing compound and at least one dye, wherein a complex forms at the reaction partner $R^1$ on the surface and wherein said complex together with the reaction partner $R^1$ comprises at least the substance to be determined and the at least one fluorophore-containing compound, and
- exciting the fluorophore bound on the surface by the evanescent field of a light source and measuring the fluorescence generated, wherein the dye absorbs in the absorption and emission ranges of the fluorophore, and wherein the contacting is effected by the substance to be determined being added to the cuvette or microtitre plate in solution, and the at least one dye and the fluorophore-containing compound being present in the cuvette or microtitre plate in lyophilized form.

2. Method according to Claim 1, wherein the substance to be determined binds as reaction partner $R^2$ to the reaction partner $R^1$ on the surface.

3. Method according to Claim 2, wherein the reaction partner $R^1$ bound to the surface is an antigen or an antibody.

4. Method according to Claim 1, wherein a reaction partner $R^2$ comprises the substance to be determined and binds to the reaction partner $R^1$ on the surface.

5. Method according to Claim 1, wherein a further compound having a binding site for the substance to be determined and containing a reaction partner $R^2$ binds to the reaction partner $R^1$ on the surface, wherein the further compound is optionally present in the cuvette or microtitre plate in lyophilized form.

6. Method according to Claim 5, wherein the reaction partner $R^1$ comprises avidin or streptavidin and the reaction partner $R^2$ comprises biotin and a binding site for the substance to be determined.

7. Method according to any of the preceding claims, wherein the substance to be determined comprises a biologically active substance selected from the group consisting of hormones, proteins, viruses, bacteria, pharmaceuticals and toxins.

8. Method according to any of the preceding claims, wherein the substance to be determined comprises a protein, preferably an antigen or an antibody.

9. Method according to any of the preceding claims, wherein the fluorophore-containing compound has a fluorescent compound and a binding site for the substance to be determined.

10. Method according to any of the preceding claims, wherein fluorescent proteins and/or low-molecular-weight fluorescent chemical compounds are used as a fluorophore.

11. Method according to Claim 10, wherein phycobiliproteins, such as allophycocyanin (APC), Cryptofluor Crimson or Cryptofluor Red, are used as fluorescent proteins.

12. Method according to Claim 10, wherein Cy5 or BODIPY is used as a low-molecular-weight fluorescent compound.

13. Method according to any of the preceding claims, wherein at least one fluorophore absorbing in a wavelength range from 600 to 700 mm is used.

14. Method according to any of the preceding claims, wherein at least one phosphorescent compound is used as a fluorophore.

15. Method according to any of the preceding claims, wherein a mixture of dyes absorbing in the absorption and/or emission range of the fluorophore is used.

16. Method according to any of the preceding claims, wherein at least one dye absorbing in a wavelength range from 600 to 700 nm is used.

17. Method according to Claim 16, wherein Brilliant Blue FCF at a concentration of at least 0.001 mM is used as the at least one dye.

18. Method according to any of Claims 1 to 17, wherein use is made of a cuvette or microtitre plate which comprises, bound to a surface, at least one reaction partner for the substance to be determined, wherein the cuvette comprises a plastic, and wherein the interior surface and/or the emission surface of the cuvette is/are polished to a surface roughness of at least 10 nm.

19. Method according to Claim 18, wherein the cuvette comprises polystyrene, polypropylene, polyethylene, polyacrylonitrile, polymethyl methacrylate, polycycloolefin, polyethylene terephthalate and/or mixtures thereof.

20. Method according to Claim 18 or 19, wherein the cuvette or microtitre plate is a one-piece construction.

21. Method according to any of Claims 18 to 20, wherein the cuvette has a reaction volume of 1 to 400 $\mu$l.

22. Use of the method according to any of Claims 1 to 17, for determining reaction kinetics of immunological reactions.

23. Use of the method according to any of Claims 1 to 17 in medical or veterinary diagnostics, in food testing, in environmental analysis or in the analysis of fermentation processes.


**Revendications**

1. Procédé de mise en évidence de substances, comprenant les étapes de

   - la fourniture d'une surface qui comprend au moins un partenaire réactionnel $R^1$ lyophilisé fixé à la surface d'une cuvette ou d'une plaque de microtitrage,
   - la mise en contact de la surface avec une solution qui comprend au moins la substance à mettre en évidence, au moins un composé contenant un fluorophore et au moins un colorant,
   un complexe se formant avec le partenaire réactionnel $R^1$ sur la surface et ce complexe comprenant, outre le partenaire réactionnel $R^1$, au moins la substance à mettre en évidence et au moins un composé contenant un fluorophore, et
   - l'excitation du fluorophore fixé sur la surface par le champ évanescent d'une source de lumière et la mesure de la fluorescence produite, le colorant étant absorbé dans le domaine d'absorption et le domaine d'émission du fluorophore et la mise en contact s'effectuant en ajoutant la substance à déterminer en solution dans la cuvette ou la plaque de microtitrage et au moins un colorant et le composé contenant le fluorophore se trouvant dans la cuvette ou la plaque de microtitrage.

2. Procédé selon la revendication 1, dans lequel la substance à mettre en évidence se lie comme partenaire réactionnel $R^2$ au partenaire réactionnel $R^1$ sur la surface.

3. Procédé selon la revendication 2, dans lequel le partenaire réactionnel $R^1$ fixé à la surface est un antigène ou un anticorps.

4. Procédé selon la revendication 1, dans lequel un partenaire réactionnel $R^2$ comprend la substance à mettre en évidence et se lie au partenaire réactionnel $R^1$ sur la surface.

5. Procédé selon la revendication 1, dans lequel un autre composé qui présente un site de liaison pour la substance à mettre en évidence et qui contient un partenaire réactionnel $R^2$ se lie au partenaire réactionnel $R^1$ sur la surface, l'autre composé se présentant éventuellement lyophilisé dans la cuvette ou la plaque de microtitrage

6. Procédé selon la revendication 5, dans lequel le partenaire réactionnel $R^1$ comprend l'avidine ou la streptavidine et le partenaire réactionnel $R^2$ contient de la biotine et un site de liaison pour la substance à mettre en évidence.

7. Procédé selon l'une quelconque des revendications précédentes, dans lequel la substance à mettre en évidence comprend une substance biologiquement active choisie dans le groupe comprenant des hormones, des protéines, des virus, des bactéries, des produits pharmaceutiques et des toxines.

8. Procédé selon l'une quelconque des revendications précédentes, dans lequel la substance à mettre en évidence comprend une protéine, de préférence un antigène ou un anticorps.

9. Procédé selon l'une quelconque des revendications précédentes, dans lequel le composé contenant des fluorophores présente un composé fluorescent et un site de liaison pour la substance à mettre en évidence.

10. Procédé selon l'une quelconque des revendications précédentes, dans lequel on utilise comme fluorophore, des protéines fluorescentes et/ou des composés chimiques fluorescents de bas poids moléculaire.

11. Procédé selon la revendication 10, dans lequel on utilise comme protéines fluorescentes, des phycobiliprotéines, telles que l'allophycocyanine (APC), le cryptofluor Crimson ou le cryptofluor Red.

12. Procédé selon la revendication 10, dans lequel on utilise comme composés fluorescents de bas poids moléculaires, Cy5 ou BODIPY.

13. Procédé selon l'une quelconque des revendications précédentes, dans lequel on utilise au moins un fluorophore qui est absorbé dans un domaine de longueurs d'ondes de 600 à 700 nm.

14. Procédé selon l'une quelconque des revendications précédentes, dans lequel au moins un composé phosphorescent est utilisé comme fluorophore.

15. Procédé selon l'une quelconque des revendications précédentes, dans lequel on utilise un mélange de colorants qui est absorbé dans le domaine d'absorption et/ou d'émission du fluorophore.

16. Procédé selon l'une quelconque des revendications précédentes, dans lequel on utilise au moins un colorant qui est absorbé dans un domaine de longueurs d'ondes de 600 à 700 nm.

17. Procédé selon la revendication 16, dans lequel on utilise au moins un colorant bleu brillant FCF en une concentration d'au moins 0,01 mM.

18. Procédé selon l'une quelconque des revendications 1 à 17, dans lequel on utilise une cuvette ou une plaque de microtitrage, qui comprend au moins un partenaire réactionnel pour la substance à mettre en évidence, lié à une surface, la cuvette comportant une matière plastique, et la face interne et/ou la surface d'émission de la cuvette étant polie(s) sur une rugosité de surface d'au moins 10 nm.

19. Procédé selon la revendication 18, dans lequel la cuvette comporte du polystyrol, du polypropylène, du polyéthylène, du polyacrylonitrile, de polyméthylméthacrylate, de la polycyclo-oléfine, du polyéthylène-téréphtalate et/ou leurs mélanges.

20. Procédé selon la revendication 18 ou 19, dans lequel la cuvette ou la plaque de microtitrage est constituée d'un seul bloc.

21. Procédé selon l'une quelconque des revendications 18 à 20, dans lequel la cuvette présente un volume réactionnel de 1 à 400 μl.

22. Utilisation du procédé selon l'une quelconque des revendications 1 à 17, pour mettre en évidence des cinétiques chimiques de réactions immunologiques.

23. Utilisation du procédé selon l'une quelconque des revendications 1 à 17, dans une méthode de diagnostic médical ou de médecine vétérinaire, dans la chimie analytique alimentaire, environnementale ou la chimie analytique des processus de fermentations.

Fig. 1

Fig. 2

**Fig. 3**

**Fig. 4**

Fig. 5

EP 1 204 856 B2

Fig. 6b

Fig. 6a

Fig. 7

EP 1 204 856 B2

**PMS-300**

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4451434 A
- EP 0671622 A1

**In der Beschreibung aufgeführte Nicht-Patentliteratur**

- *Anal. Chem.,* 1999, vol. 71, 294R-304R